# EUROPÄISCHE PATENTANMELDUNG

(11) **EP 4 461 555 A1**
(43) Veröffentlichungstag der Anmeldung: **13.11.2024**
(21) Anmeldenummer: 24174509.0
(22) Anmeldetag: 07.05.2024
(51) Int. Cl.: B42D 25/324, B42D 25/328, B42D 25/351, B42D 25/364, B42D 25/373, B42D 25/391, B42D 25/425, B42D 25/29, G07D 7/12

(54) **SICHERHEITSELEMENT MIT MOTIVBILDENDER FLÜSSIGKRISTALLSCHICHT**

(30) Priorität: 08.05.2023 DE 102023111992
(71) Anmelder: Giesecke+Devrient Currency Technology GmbH, 81677 München (DE)
(72) Erfinder: Mang, Thomas, 83703 Gmund am Tegernsee (DE); Heim, Manfred, 83703 Gmund am Tegernsee (DE); Schinabeck, Josef, 83703 Gmund am Tegernsee (DE); Teufel, Björn, 83703 Gmund am Tegernsee (DE); Hoffmüller, Winfried, 83703 Gmund am Tegernsee (DE); Rauch, Andreas, 83703 Gmund am Tegernsee (DE)
(74) Vertreter: Giesecke+Devrient IP

(57) **Zusammenfassung**

Die Erfindung betrifft ein Sicherheitselement (20) zur Absicherung von Wertgegenständen (10), mit einer Motivschicht auf Basis eines flüssigkristallinen Materials, das zu Ausbildung eines latenten Motivs ausgelegt und bestimmt ist. Erfindungsgemäß ist dabei vorgesehen, dass das Sicherheitselement (20) eine auf einer Trägerfolie (22) angeordnete erste Prägelackschicht (26), eine partiell vorliegende Motivschicht (30) auf Basis eines nematischen flüssigkristallinen Materials und eine ein- oder mehrschichtige vollflächig vorliegende zweite Prägelackschicht (34) umfasst. Die erste Prägelackschicht (26) ist mit einer Prägung versehen, die zur Ausbildung eines zweiten latenten Motivs zumindest zwei Bereiche (28A, 28B) mit Ausrichtungsstrukturen unterschiedlicher Orientierung aufweist. Die Motivschicht (30) ist in Form eines ersten latenten Motivs bereichsweise direkt auf der ersten Prägelackschicht (26) und überlappend mit den das zweite latente Motiv bildenden Bereichen (28A, 28B) angeordnet. Dabei ist das flüssigkristalline Material durch die motivbildenden Bereiche in Form des zweiten latenten Motivs mit jeweils unterschiedlicher Orientierung homogen ausgerichtet, so dass das von den unterschiedlichen Ausrichtungsstrukturen gebildete Motiv bei Betrachtung durch einen Polarisator erkennbar ist. Die zweite Prägelackschicht (24) ist mit einer Prägung zur Erzeugung einer mikrooptischen Reliefstruktur (38) und einer reflexionserhöhenden Beschichtung (36) versehen.

## Beschreibung

Die Erfindung betrifft ein Sicherheitselement zur Absicherung von Wertgegenständen, mit einer Motivschicht auf Basis eines flüssigkristallinen Materials, das zu Ausbildung eines latenten Motivs ausgelegt und bestimmt ist. Die Erfindung betrifft ferner ein zugehöriges Herstellungsverfahren sowie einen Datenträger mit einem derartigen Sicherheitselement.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können.

Vielfach werden auch die besonderen Eigenschaften von flüssigkristallinen Materialien ausgenutzt, und dabei vor allem der betrachtungswinkelabhängige Farbeindruck und/oder die lichtpolarisierende Wirkung der Flüssigkristalle.

Solche Materialien sind nach dem Auftragen auf einen Träger praktisch unsichtbar, zeigen jedoch bei entsprechendem Untergrund, z.B. einem reflektierenden Druckträger und unter Zuhilfenahme von linearen oder zirkularen Polarisatoren ausgeprägte visuelle optische Effekte. Erst bei Betrachtung durch einen linearen oder zirkularen Polarisator treten die beschichteten Bereiche mehr oder minder optisch hervor. Dabei können die Eindrücke zusätzlich in hohem Maße von der (Winkel-)Stellung des Polarisators abhängig sein.

Die hierbei eingesetzten Verfahren basieren beispielsweise darauf, dass die nematische Flüssigkristallschicht über einer spiegelnden Metallschicht bereitgestellt ist, um eine gute Erkennbarkeit der Polarisationseffekte zu ermöglichen. In der Druckschrift WO 2005/105475 A1 ist ein Verfahren beschrieben, bei dem das nematische flüssigkristalline Material, beispielsweise ein lösungsmittelbasierter UV-vernetzbarer Flüssigkristalllack, auf eine Trägerfolie musterförmig aufgedruckt wird.

Die bei diesen Verfahren eingesetzten Kunststoff-Trägerfolien haben aufgrund ihrer inneren Struktur eine Vorzugsrichtung (in Laufrichtung), die ausreicht, um das flüssigkristalline Material in der gewünschten Form auszurichten. Insbesondere eignen sich Kunststofffolien, die eine bei der Herstellung entstandene Oberflächenstruktur aufweisen, wie beispielsweise PET-Folien.

Über die Trägerfolie und die Nematenschicht wird dann in einem weiteren Arbeitsschritt vollflächig eine UV-härtbare Prägelackschicht aufgedruckt. In die Prägelackschicht wird eine gewünschte Prägestruktur, z.B. eine Beugungsstruktur, eingeprägt und eine reflektierende Schicht, z.B. in Form einer Metallschicht, aufgebracht, insbesondere aufgedampft, in die durch partielle Demetallisierung Aussparungen eingebracht werden können. Zuletzt wird für den Transfer auf ein Zielsubstrat (z. B. Papier) eine haftvermittelnde bzw. Primer-Schicht und auf diese eine Klebeschicht auf den Schichtverbund aufgebracht.

Von oben betrachtet ergibt sich daraus die folgende Schichtenfolge: nematische Flüssigkristalle, UV-Lack (mit Prägestruktur), Metallisierung. Ohne Hilfsmittel betrachtet zeigt der Schichtverbund lediglich die durch die Prägestruktur bereitgestellten optisch variablen Beugungsstrukturen, wie etwa Hologramme. Wird dieser hingegen durch einen zirkularen Polarisationsfilter betrachtet, so treten zusätzliche Strukturen in Erscheinung. Bereiche mit Metallisierung und ohne nematische Flüssigkristallschicht erscheinen schwarz oder zumindest dunkel, während Bereiche mit nematischen Flüssigkristallen ein helles Erscheinungsbild zeigen. Eine horizontale Drehung des zirkularen Polarisationsfilters führt dabei zu keiner Kontraständerung.

Alternativ können die Strukturen auch mit einem linearen Polarisationsfilter (oder einem durch die Rückseite betrachteten, also "umgedrehten" zirkularen Polarisationsfilter) sichtbar gemacht werden. In diesem Fall erscheinen die metallisch beschichteten Bereiche ohne Flüssigkristallbeschichtung immer hell. In den zusätzlich mit dem nematischen flüssigkristallinen Material versehenen Bereichen kann durch geeignete horizontale Drehung des linearen Polarisationsfilters entweder ein dunkler, zu den Bereichen ohne die Nematenschicht kontrastierender Eindruck erzeugt werden oder die Bereiche zeigen ein helles Erscheinungsbild ohne wahrnehmbaren Kontrast zu den umgebenden metallisierten Bereichen.

Flüssigkristalline Schichten, die aus lösungsmittelhaltiger Formulierung hergestellt werden, können im Allgemeinen nur schwer in hoher Auflösung aufgebracht werden, da erhebliche Nassfilmdicken gedruckt werden müssten, die aufgrund der niedrigen Viskosität der Formulierungen einen erheblichen Verlauf bzw. ein "Fließen" nach dem Druck zeigen.

Für einen optimalen Kontrast bildet die nematische Flüssigkristallschicht eine λ/4-Schicht für Licht aus dem vorgesehenen Wellenlängenbereich. Je nach Doppelbrechung der Flüssigkristallmoleküle ist dafür eine bestimmte Schichtdicke (Größenordnung 1 g/m²) erforderlich, weshalb nicht beliebig dünn gedruckt werden kann. Zugabe von Verdickern führt in der Regel zu einem Qualitätsverlust bei den optischen Eigenschaften der Flüssigkristallschichten.

Optisch anisotope Folien im optischen Weg können den erzielbaren Kontrast ebenfalls vermindern, wodurch eine Releasefähigkeit von der Trägerfolie vorteilhaft ist. Sehr dünne UV-vernetzte (Flüssigkristall-)Schichten haben aber oft eine schlechte Releasefähigkeit.

Im Allgemeinen benötigen lösungsmittelbasierte Flüssigkristalllacke ausrichtungsfördernde Bedingungen, um ihre Wirkung entfalten zu können. In weiteren Verfahren werden für diesen Zweck spezielle Alignment- bzw. Ausrichtungsschichten eingesetzt. Insbesondere finden Alignmentschichten Verwendung, die aus einem linearen Photopolymer bestehen, das zur Ausrichtung einer geeigneten Strahlung ausgesetzt wird. Des Weiteren können flüssigkristalline Materialien auch mithilfe von Alignmentschichten ausgerichtet werden, die durch eine fein strukturierte Schicht oder eine durch Ausübung von Scherkräften ausgerichtete Schicht bereitgestellt werden.

Wird beispielsweise eine alignierende Prägestruktur mit zwei unterschiedlichen Orientierungen mit nematischem flüssigkristallinem Material beschichtet, führt die dadurch erzielte bereichsweise unterschiedliche Ausrichtung der Flüssigkristalle dazu, dass das Prägemotiv mit einem linearen Polarisationsfilter (durch Drehen des Polarisationsfilters) in Positiv- oder Negativkontrast sichtbar gemacht werden kann. Mit einem zirkularen Polarisationsfilter kann dagegen kein Motiv erkannt werden.

Es werden auch Sicherheitselemente mit latenten Bildern eingesetzt, bei denen die Flüssigkristallschicht auf einer flüssigkristallinen Mischung basiert, die dichroitische Farbstoffe enthält, wie beispielsweise in der Druckschrift WO 2019/068655 A1 beschrieben. Die flüssigkristalline Mischung wird dabei auf eine mit einer Prägung versehene Prägelackschicht aufgedruckt und im Rahmen eines Prägeprozesses geprägt und ausgerichtet. Dabei werden die Flüssigkristalle an beiden Grenzflächen unabhängig voneinander ausgerichtet. Zusammen mit dem dichroitschen Farbstoff entstehen dadurch Sicherheitsmerkmale, die von beiden Seiten unterschiedliche, voneinander unabhängige Motive zeigen, die sich mittels Bestrahlen mit linear polarisiertem Licht sichtbar machen lassen. Ein ähnlicher Ansatz ist in der Druckschrift EP 4 129 709 A1 beschrieben. Eine beidseitige Prägung kann allerdings zu einem Auswalzen des ungehärteten Materials führen und damit zu undefinierten Motiven.

Ausgehend davon liegt der Erfindung die Aufgabe zugrunde, ein Sicherheitselement der eingangs genannten Art anzugeben, das die Nachteile des Standes der Technik vermeidet, einfach und kostengünstig herstellbar ist und dabei neben einem attraktiven Erscheinungsbild einen erhöhten Schutz gegenüber Fälschungen aufweist.

Diese Aufgabe wird durch die Merkmale der unabhängigen Ansprüche gelöst. Weiterbildungen der Erfindung sind Gegenstand der abhängigen Ansprüche.

Nach der Erfindung ist bei einem gattungsgemäßen Sicherheitselement vorgesehen, dass dieses eine auf einer Trägerfolie angeordnete erste Prägelackschicht, eine partiell vorliegende Motivschicht auf Basis eines nematischen flüssigkristallinen Materials und eine ein- oder mehrschichtige vollflächig vorliegende zweite Prägelackschicht umfasst.

Die erste Prägelackschicht ist dabei mit einer Prägung versehen, die zur Ausbildung eines zweiten latenten Motivs zumindest zwei Bereiche mit Ausrichtungsstrukturen unterschiedlicher Orientierung aufweist.

Die Motivschicht ist in Form eines ersten latenten Motivs bereichsweise direkt auf der ersten Prägelackschicht und überlappend mit den das zweite latente Motiv bildenden Bereichen angeordnet, wobei das flüssigkristalline Material durch die motivbildenden Bereiche in Form des zweiten latenten Motivs mit jeweils unterschiedlicher Orientierung homogen ausgerichtet ist, so dass das von den unterschiedlichen Ausrichtungsstrukturen gebildete Motiv bei Betrachtung durch einen Polarisator erkennbar ist.

Die zweite Prägelackschicht ist mit einer Prägung zur Erzeugung einer mikrooptischen Reliefstruktur und einer reflexionserhöhenden Beschichtung versehen.

Die Schicht aus nematischem flüssigkristallinem Material weist polarisationsabhängige optische Effekte auf, die mit dem Auge nicht wahrgenommen werden können, jedoch durch Hilfsmittel, z. B. durch Polarisationsfilter linearer oder zirkularer Art detektierbar sind, insbesondere mit solchen Hilfsmitteln für das Auge des Betrachters sichtbar gemacht werden können.

In einer vorteilhaften Ausgestaltung ist das flüssigkristalline Material durch einen ersten motivbildenden Bereich unter einem Winkel zur Ausrichtung der flüssigkristallinen Materials durch einen zweiten motivbildenden Bereich ausgerichtet und weist eine zum ersten motivbildenden Bereich unterschiedliche Polarisationswirkung auf.

Die erste Prägelackschicht liegt dabei bevorzugt vollflächig vor. Zumindest in dem Bereich der Motivschicht weist diese mit Vorteil keine Bereiche ohne die Ausrichtung des flüssigkristallinen Materials fördernde Strukturen auf.

Gemäß einer vorteilhaften Ausgestaltung weist die dem flüssigkristallinen Material zugewandte Oberfläche der ersten Prägelackschicht in den motivbildenden Bereichen feine Rillen oder Gitter auf, durch die die Moleküle des flüssigkristallinen Materials ausgerichtet sind.

Mit Vorteil weisen die Rillen oder Gitter dabei eine Periodenlänge von 0,2 µm bis 2,0 µm, vorzugsweise von 0,8 µm bis 1,2 µm, und eine Profiltiefe von 50 nm bis 600 nm, vorzugsweise von 200 nm bis 400 nm auf.

Mit Vorteil liegt der Brechungsindex der ersten und/oder der zweiten Prägelackschicht im sichtbaren Spektrum zwischen den orientierungsabhängigen Brechungsindizes der Motivschicht. Ebenso vorteilhaft unterscheiden sich die Brechungsindizes der Ausrichtungsschicht und der zweiten Prägelackschicht im sichtbaren Spektrum um nicht mehr als 0,1 insbesondere um nicht mehr als 0,05.

Die Ausrichtungsstrukturen können auch nur in dem Bereich der Motivschicht und insbesondere registergenau zu dieser vorgesehen sein.

In einer vorteilhaften Ausgestaltung enthält das erste latente Motiv ein oder mehrere erste Bildelemente und enthält das zweite latente Motiv eine Vielzahl von zweiten Bildelementen, wobei die ersten und zweiten Bildelemente alphanumerische Zeichen, Muster oder Codierungen umfassen. Mit Vorteil sind die zweiten Bildelemente dabei in einem Raster angeordnet.

Die mikrooptische Reliefstruktur ist mit Vorteil durch eine diffraktive Struktur, insbesondere eine ein- oder zweidimensionale periodische diffraktive Struktur, durch eine Mattstruktur, eine Subwellenlängenstruktur, insbesondere ein Subwellenlängengitter oder eine Mottenaugenstruktur, und/oder durch eine nicht-beugende Mikrostruktur, insbesondere eine Anordnung von Mikrospiegeln oder Mikrolinsen, gebildet.

Die Erfindung enthält auch einen Datenträger mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, ein Siegel, eine Steuerbanderole, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Die Erfindung stellt schließlich auch ein Verfahren zur Herstellung eines Sicherheitselements der beschriebenen Art bereit, bei dem
- auf eine Trägerfolie zur Ausbildung einer Ausrichtungsschicht zur homogenen Orientierung eines flüssigkristallinen Materials eine erste Prägelackschicht aufgebracht wird,
- die erste Prägelackschicht mit einer Prägung versehen wird, um zur Ausbildung eines zweiten latenten Motivs zumindest zwei Bereiche mit Ausrichtungsstrukturen unterschiedlicher Orientierung zu erzeugen, und der Prägelack ausgehärtet wird,
- eine Motivschicht auf Basis eines nematischen flüssigkristallinen Materials in Form eines ersten latenten Motivs bereichsweise direkt auf die erste Prägelackschicht und überlappend mit den das zweite latente Motiv bildenden Bereichen aufgebracht wird, wobei das flüssigkristalline Material durch die Ausrichtungsstrukturen der motivbildenden Bereiche mit unterschiedlicher, homogener Orientierung ausgerichtet wird,
- das flüssigkristalline Material durch Beaufschlagung mit Strahlung gehärtet wird, und
- auf die Trägerfolie mit der Motivschicht eine ein- oder mehrschichtige zweite Prägelackschicht vollflächig aufgebracht wird, die zweite Prägelackschicht mit einer Prägung zur Erzeugung einer mikrooptischen Reliefstruktur und anschließend mit einer reflexionserhöhenden Beschichtung versehen wird.

Gemäß einer vorteilhaften Ausgestaltung des Verfahrens wird die erste Prägelackschicht ohne Vorhärtung geprägt. Bevorzugt wird vor dem Aufbringen der ersten Prägelackschicht eine weitere Lackschicht auf die Trägerfolie aufgebracht und zumindest teilweise gehärtet.

Mit Vorteil wird das flüssigkristalline Material vor der Beaufschlagung mit Strahlung physikalisch getrocknet. Das flüssigkristalline Material wird bevorzugt durch Beaufschlagung mit UV-Strahlung gehärtet.

Wie die zweite Prägelackschicht wird auch die erste Prägelackschicht bevorzugt vollflächig aufgebracht.

Besonders zweckmäßig ist es darüber hinaus, wenn die zweite Prägelackschicht metallisiert und gegebenenfalls bereichsweise demetallisiert wird.

Mit besonderem Vorteil wird/werden die erste und/oder die zweite Prägelackschicht und/oder die Motivschicht aufgedruckt.

In weiteren vorteilhaften Ausgestaltungen wird/werden eine oder mehrere weitere Schichten, insbesondere eine Primerschicht, eine Heißsiegellackschicht, eine Druckempfangsschicht und/oder eine Schutzschicht, auf die zweite Prägelackschicht aufgebracht, insbesondere aufgedruckt.

Nachfolgend wird die Erfindung anhand von Ausführungsbeispielen unter Bezugnahme auf die beigefügten Figuren, die ebenfalls erfindungswesentliche Merkmale offenbaren und bei deren Darstellung auf eine maßstabs- und proportionsgetreue Wiedergabe verzichtet wurde, noch näher erläutert. Diese Ausführungsbeispiele dienen lediglich der Veranschaulichung und sind nicht als einschränkend auszulegen. Die Darstellungen in den Figuren sind des besseren Verständnisses wegen stark schematisiert und spiegeln nicht die realen Gegebenheiten wider. Zur Vermeidung von Wiederholungen werden gleiche oder einander entsprechende Elemente in verschiedenen

Figuren mit gleichen Bezugszeichen bezeichnet und nicht mehrmals erläutert. In den Figuren zeigen:
- Fig. 1: eine schematische Darstellung einer Banknote mit einem eingebetteten Sicherheitsfaden und einem aufgeklebten Transferelement,
- Fig. 2: eine Querschnittsansicht des Aufbaus eines Sicherheitselements nach einem Ausführungsbeispiel der Erfindung,
- Fig. 3: in (a) eine Aufsicht auf ein Ausführungsbeispiel eines Sicherheitselements mit einer strukturierten Ausrichtungsschicht und einer motivförmig aufgebrachten Flüssigkristallschicht, und in (b) eine vergrößerte Ansicht der Ausrichtungsstruktur,
- Fig. 4: eine Aufsicht auf das Sicherheitselement der Fig. 3, wie es bei Betrachtung (a) ohne Hilfsmittel, (b) bei Betrachtung mit einem zirkularen Polarisator, (c) bei Betrachtung mit einem linearen Polarisator in einer ersten Stellung und (d) bei Betrachtung mit einem linearen Polarisator in einer zweiten, dazu gedrehten Stellung erscheint.

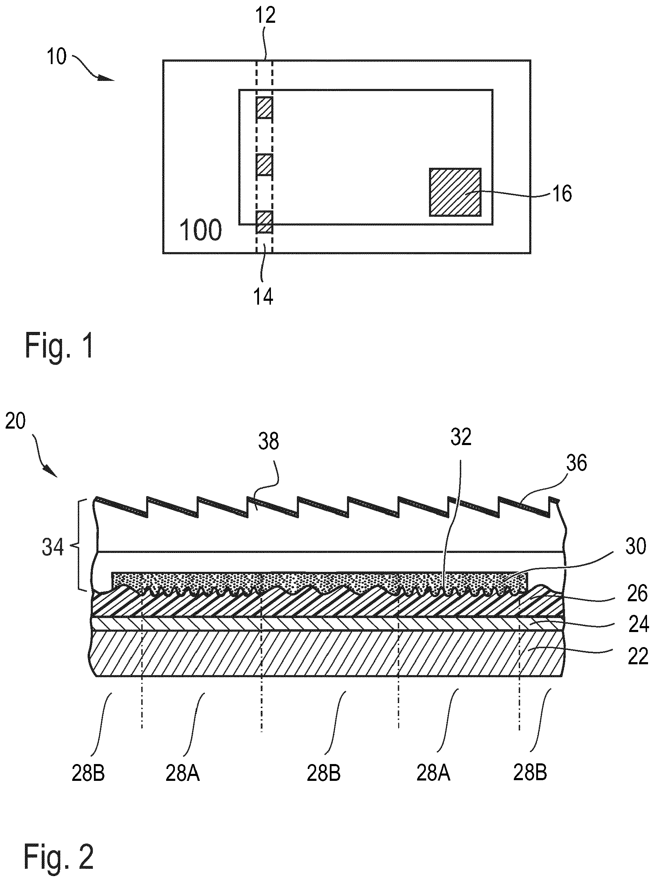

Die Erfindung wird nun am Beispiel von Sicherheitselementen für Banknoten erläutert. Fig. 1 zeigt dazu eine schematische Darstellung einer Banknote 10, die mit zwei Sicherheitselementen 12 und 16 nach Ausführungsbeispielen der Erfindung versehen ist. Das erste Sicherheitselement stellt einen Sicherheitsfaden 12 dar, der an bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet. Transferelemente können insbesondere als Patches oder Streifen jeweils mit oder ohne eigene Trägerschicht vorliegen. Das Sicherheitselement 16 kann auch in Form einer Abdeckfolie ausgebildet sein, die über einem Fensterbereich oder einer durchgehenden Öffnung der Banknote angeordnet ist.

Der Aufbau sowie die Herstellung eines Sicherheitselements 20 nach einem ersten Ausführungsbeispiel wird nun anhand des Querschnitts der Figur 2 näher erläutert.

Als Basis des Sicherheitselements 20 dient eine hochwertige gereckte PET-Trägerfolie 22, auf die im Ausführungsbeispiel eine dünne Schicht 24 aus einem UV-härtbaren Lack vollflächig aufgebracht wird. Auf die (teilweise oder vollständig ausgehärtete) Lackschicht 24 wird vollflächig ein UV-härtbarer Prägelack 26 aufgebracht, der im sogenannten "Casting" möglichst ohne Vorhärtung geprägt wird.

Die Teilbereiche 28A, 28B werden jeweils vollflächig mit einer Ausrichtungsstruktur 32 versehen. Die Ausrichtungsstruktur 32 besteht beispielsweise aus einer Vielzahl nebeneinander angeordneter, paralleler Rillen, die eine Orientierung von Flüssigkristallmolekülen ermöglichen. Beispielsweise weisen diese Rillen eine Periodenlänge von 0,2 µm bis 2,0 µm und eine Profiltiefe von 200 nm bis 600 nm auf. Auch geringere Profiltiefen sind denkbar, beispielsweise im Bereich von 50 nm. Die Längsrichtung dieser Rillen stellt hierbei die Orientierungsrichtung der Ausrichtungsstruktur dar.

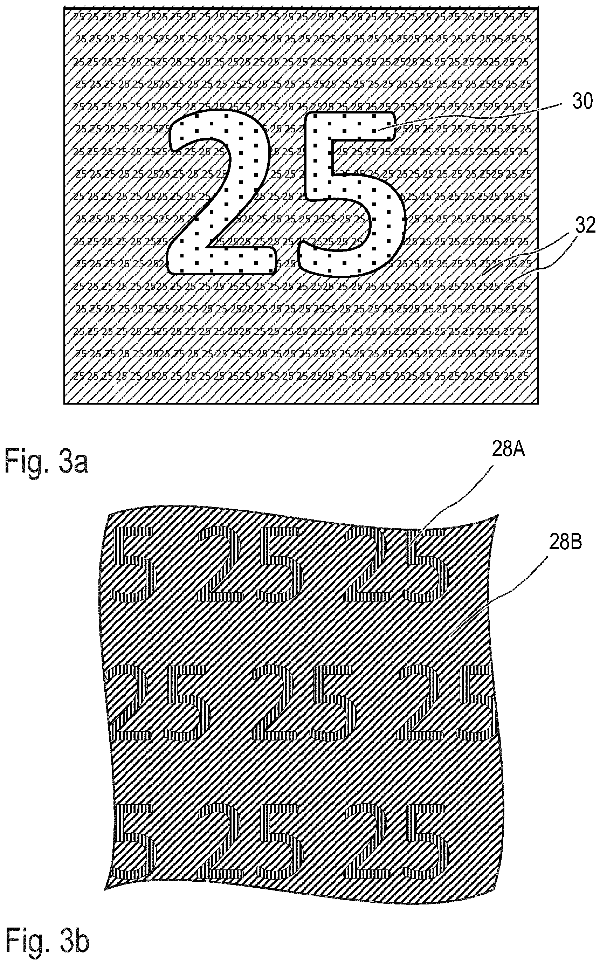

Wie der Darstellung der Figuren 2 und 3 zu entnehmen ist, ist die Orientierungsrichtung der Ausrichtungsstruktur 32 in den Teilbereichen 28A und 28B unterschiedlich. So weist der Teilbereich 28A beispielsweise eine Vielzahl von senkrecht angeordneten parallelen Rillen, der Teilbereich 28B eine Vielzahl von um 45 ° gegenüber der Senkrechten gedrehten parallelen Rillen auf (in Fig. 3b angedeutet durch die Schraffur). Im Ausführungsbeispiel ist der Teilbereich 28A rasterförmig in Form einer Vielzahl sich wiederholender Bildelemente ("25") vor dem durch den Teilbereichs 28B gebildeten Hintergrund mit anderer alignierender Orientierung angeordnet ("Tapetenmotiv").

Auf die Ausrichtungsstruktur 32 wird eine dünne Schicht 30 aus einem nematischen flüssigkristallinen Material motivförmig ("25") aufgebracht, insbesondere aufgedruckt. Für eine erhöhte Kantenschärfe kann es vorteilhaft sein, die Kanten bzw. Ränder des Motivs mit verringerter Grammatur anzulegen.

Das mithilfe des flüssigkristallinen Materials aufgebrachte Motiv kann vorteilhaft mit hoher Strichstärke vorliegen. Insbesondere können die Abmessungen des durch das flüssigkristalline Material 30 erzeugten Motivs so gewählt sein, dass diese deutlich, vorzugsweise um ein Vielfaches, größer sind als die Abmessungen der durch den Teilbereich 28A der Ausrichtungsstruktur 32 gebildeten Bildelemente.

Nach dem Aufbringen der Flüssigkristallschicht 30 orientieren sich die nematischen Flüssigkristalle in den Teilbereichen 28A, 28B homogen entsprechend der Vorgabe der Ausrichtungsstruktur 32. Die Flüssigkristall-Motivschicht 30 weist damit den Teilbereichen 28A, 28B entsprechende Bereiche auf, in denen sich die Orientierung der Flüssigkristalle unterscheidet. Die so erhaltenen Ausrichtungen werden, ggf. nach physikalischer Trocknung zur Entfernung etwaiger Lösungsmittel, durch Vernetzung der Flüssigkristallschicht 30 mit UV-Bestrahlung fixiert.

Auf die erhaltene Schichtenfolge wird ein ein- oder mehrschichtiger Prägelackaufbau 34 aufgebracht. In diesen wird eine Reliefstruktur 38, z. B. eine Hologrammstruktur oder einer Mikrospiegelstruktur oder ein Subwellenlängengitter, geprägt, die anschließend mit einer reflexionserhöhenden Beschichtung, beispielsweise einer Metallisierung 36 versehen wird. In die vorzugsweise aufgedampfte Metallschicht 36 (z. B. aus Aluminium) können durch partielle Demetallisierung Aussparungen (nicht gezeigt), beispielsweise in Form einer Negativschrift eingebracht werden.

Die Aussparungen können mithilfe eines Ätzverfahrens oder eines Waschverfahrens erzeugt werden. Bei Einsatz eines Waschverfahrens werden vor dem Aufbringen der Metallschicht lösliche Waschfarben aufgedruckt, die nach der Bedampfung zusammen mit den darauf abgeschiedenen Substanzen der PVD-Schicht abgewaschen werden. Bei Einsatz eines Ätzverfahrens wird zunächst der PVD-Beschichtungsprozess durchgeführt, anschließend ein Resistlack gedruckt und strukturiert. In den ungeschützten Stellen wird die PVD-Schicht dann durch ein Ätzmittel entfernt. Der übrige Resistlack kann auf der PVD-Schicht verbleiben oder durch den Einsatz geeigneter Lösungsmittel entfernt werden.

Alternativ zu Metallschichten kann die Reliefstruktur 38 auch mit einer hochbrechenden Schicht versehen werden. Beispiele für Beispiele für geeignete hochbrechende Materialien sind CaS, Cr0₂, ZnS, Ti0₂ oder SiOₓ. Ebenso können auch Dünnschichtelemente mit Farbkippeffekt mittels eines PVD-Beschichtungsverfahren auf die Reliefstruktur 38 aufgebracht und ggf. mit Aussparungen versehen werden. Derartige Dünnschichtelemente basieren insbesondere auf betrachtungswinkelabhängigen Interferenzeffekten durch Mehrfachreflexionen in den verschiedenen Teilschichten des Elements.

Das erhaltene Produkt kann direkt mit einer Primer-Schicht und Heißsiegellack heißsiegelfähig ausgestattet und beispielsweise auf ein Substrat, z. B. Papier, appliziert werden. Die Trägerfolie 22 kann dabei nach der Applikation auf das Substrat entfernt werden oder als Abdeckfolie im Aufbau verleiben. Die letztgenannten Gestaltungen werden insbesondere bei der Aufbringung von Sicherheitselementen eingesetzt, die durchgehende Öffnungen in dem zu sichernden Gegenstand abdecken sollen.

Vor dem Aufbringen des Heißsiegellacks können zudem weitere maschinell lesbare und/oder dekorative Schichten auf die ggf. teilweise demetallisierte Prägelackschicht 34, insbesondere auch in Überlappung mit der Metallisierung 36 aufgebracht werden. Der Heißsiegellack kann darüber hinaus maschinenlesbare Merkmalsstoffe, wie z.B. magnetische, elektrisch leitfähige, phosphoreszierende oder fluoreszierende Stoffe enthalten.

Der Schichtaufbau kann alternativ auch z.B. zu einem sogenannten Patch bzw. Einzel-Sicherheitselement weiterverarbeitet werden. Hierzu kann eine weitere Folie, z. B. eine PET-Folie mit einer geringen Dicke (z. B. 6 µm) auf den Schichtaufbau aufkaschiert werden. Auf die Seite der Trägerfolie 22 kann dann eine Stützfolie für den ggf. erfolgenden Schneid- bzw. Stanzprozess aufkaschiert werden, während die Oberfläche der genannten dünnen PET-Folie mit Primer und Heißsiegellack versehen werden kann. Nach dem Vorschneiden bzw. Stanzen der Umrissformen und Abgittern können die vorgefertigten Einzel-Sicherheitselemente (Patches) dann auf ein Substrat appliziert werden. Verfahren zur Herstellung eines solchen Sicherheitselement-Transfermaterials sowie Verfahren zum Übertragen eines Sicherheitselements aus dem Sicherheitselement-Transfermaterial auf einem Wertgegenstand sind beispielsweise in der Druckschrift WO 2010/031543 A1 beschrieben.

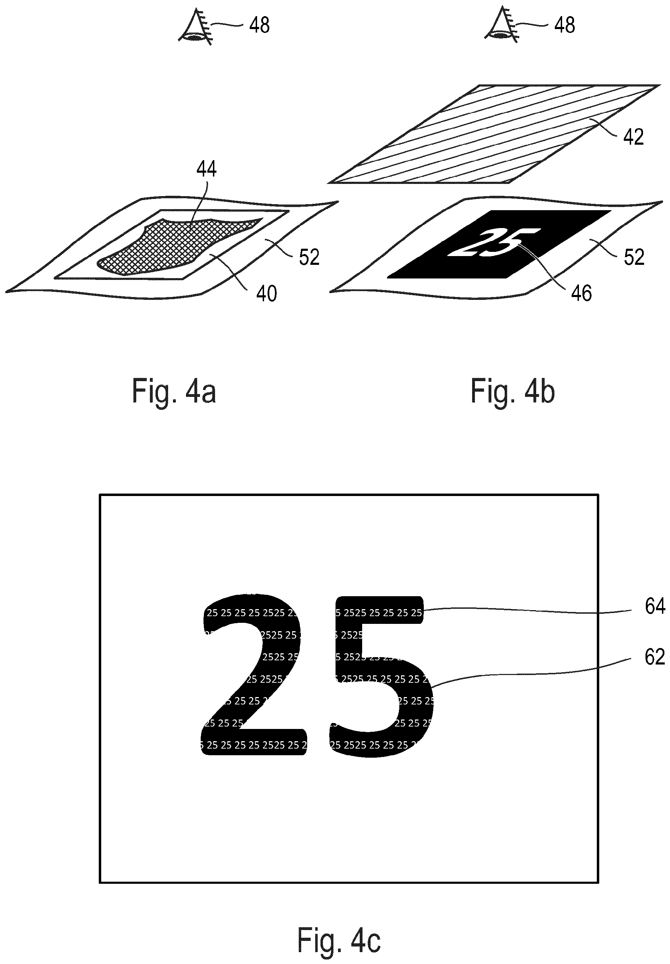

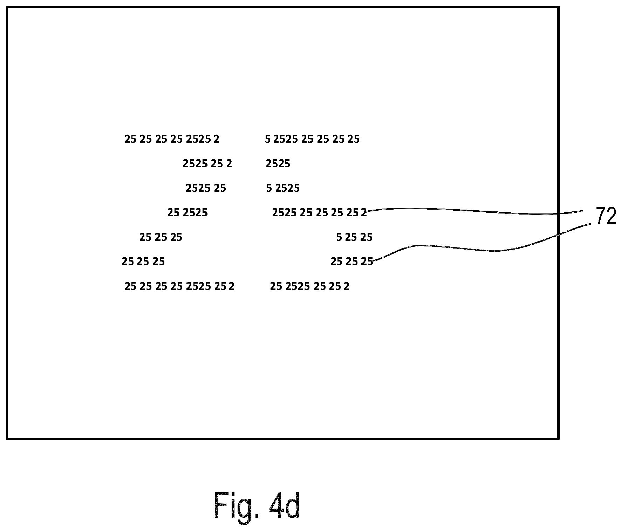

Fig. 4 zeigt eine Aufsicht auf ein Einzel-Sicherheitselement 40, wie es bei Betrachtung ohne Hilfsmittel erscheint. Ohne Hilfsmittel betrachtet, zeigt das Sicherheitselement 40 das Erscheinungsbild einer metallischen glänzenden, optisch variablen Mikrostruktur, im Ausführungsbeispiel ein mithilfe von Mikrospiegeln erzeugtes Reliefbild 44 in Wappenform (Fig. 4a).

Bei Betrachtung eines solchen Sicherheitselements 40 mit einem zirkularen Polarisationsfilter 42 kann das durch die Flüssigkristallschicht 30 erzeugte Bildmotiv 46 sichtbar gemacht werden und erscheint in diesem Bereich in Form des Zeichens "25" hell auf einem dunklen Hintergrund (Fig. 4d). Ein Drehen des Polarisationsfilters bewirkt keine Änderung des Erscheinungsbilds.

Ein weiteres Motiv kann bei Betrachtung des Sicherheitselements mit einem (nicht dargestellten) linearen Polarisationsfilter (oder einem durch die Rückseite betrachteten, also "umgedrehten" zirkularen Polarisationsfilter) sichtbar gemacht werden. In diesem Fall erscheinen die metallisch beschichteten Bereiche ohne die Flüssigkristallschicht hell, während der Betrachter 48 bei einer ersten Orientierung des linearen Polarisationsfilters im Bereich der Flüssigkristallschicht den Teilbereich 28B als großes Bildelement 62 (große "25") dunkel und den Bereich 28A als helles Motiv in Form von rasterartig angeordneten kleinen Bildelementen 64 (kleine "25") wahrnimmt (Fig. 4c).

Beim Drehen des linearen Polarisationsfilters ändern sich die relativen Helligkeiten und kehren sich bei einer Drehung um 45° im Bereich der Flüssigkristallschicht 30 gerade um, so dass nun die kleinen Bildelemente 72 als dunkles Motiv sichtbar werden, dessen Umriss durch den Bereich der Flüssigkristallschicht vorgegeben ist. Der dem Teilbereich 28B entsprechende Hintergrund erscheint ohne oder mit lediglich geringem Kontrast zu dem nicht mit der Flüssigkristallschicht 30 versehenen, ebenfalls hell erscheinendem Bereich des Sicherheitselements 40 (Fig. 4d). Die kleinen Zeichen werden hier zur Definition des größeren Zeichens verwendet.

Ein besonderer Vorteil der beschriebenen Gestaltung besteht darin, dass diese unterschiedliche latente Motive enthält, die je nach Wahl des als Hilfsmittel eingesetzten Polarisationsfilters sichtbar gemacht werden können. Insbesondere können neben einem "makroskopischen", leicht erkennbaren Motiv auch sehr scharf begrenzte "mikroskopische" Motive erzeugt werden, da die Auflösung des polarisierenden Motivs nicht mehr ausschließlich durch die Druckgenauigkeit, sondern auch durch die Genauigkeit der Strukturierung bestimmt ist.

Darüber hinaus bietet die Erfindung ein visuell interessanteres Bild als bekannte latente Sicherheitsmarkmale auf Basis von Flüssigkristallen. Wenn ein Sicherheitselement für den Betrachter interessant ist, erhöht sich die Wahrscheinlichkeit, dass dieser dem Sicherheitselement und dem damit versehenen Wertgegenstand mehr Aufmerksamkeit schenkt, wodurch wiederum eine größere Sicherheitswirkung erreicht wird.

Da die unterschiedlichen Motive je nach Seite des (zirkularen) Polfilters, durch die das Sicherheitselement betrachtet wird, verwirrend sein könnten, kann auf dem als Verifikationsmedium verwendeten Polarisationsfilter auf der jeweils oben liegenden Seite das zu erwartende Motiv stilisiert wiedergegeben werden. Bei der einem linearen Polarisationsfilter in der Wirkung entsprechenden Seite eines zirkularen Polarisationsfilters ("umgedrehter" zirkularer Polarisationsfilter) bzw. bei einem linearen Polarisationsfilter können auch beide durch Drehung erreichbaren Motive stilisiert wiedergegeben werden.

Für eine Verifikation muss hier grundsätzlich einfallendes Licht und ausfallendes Licht polarisiert sein/werden, was durch Auflegen eines Polfilters erreicht werden kann. Es sind aber auch weitere Variationen denkbar. Beispielsweise kann die den Betrachtungsbereich erhellende Lichtquelle polarisiertes Licht aussenden. Unter diesen Umständen kann der Beobachter an einem beliebigen Punkt zwischen sich und dem Verifikationsgegenstand den Polarisationsfilter einsetzen, z. B. in Form einer polarisierenden Brille.

Die (optisch wichtigen) Arbeitsschritte bei der Herstellung des Sicherheitselements beginnen mit der ersten Prägung. Auf die damit erzeugte Ausrichtungsstruktur 32 wird das Motiv aus nematischem flüssigkristallinem Material 30 aufgebracht, insbesondere gedruckt. Die Ausrichtungsstruktur 32 wird von den nematischen Flüssigkristallen in diesem Bereich aufgefüllt (Profiltiefe der Ausrichtungsstruktur z. B. 200 nm, Schichtdicke der nematischen Flüssigkristallschicht z. B. 1 µm). Bei geeigneter Wahl des Brechungsindexes des UV-Prägelacks 26 verschwindet die Prägestruktur optisch.

Im Idealfall sind die Brechungsindizes der angrenzenden Materialien so aufeinander abgestimmt, dass keine starken Brechungsindexsprünge auftreten, die das Motiv der Ausrichtungsstruktur auch ohne Hilfsmittel und damit permanent sichtbar machen würden. Da Flüssigkristallschichten einen orientierungsabhängigen Brechungsindex haben, ist der UV-Prägelack 26 bevorzugt so zu wählen, dass sein Brechungsindex zwischen den beiden orientierungsabhängigen Brechungsindizes der Flüssigkristallschicht 30 liegt.

Wenn eine Erkennbarkeit der nematische Flüssigkristallschicht bei Betrachtung des Sicherheitselements ohne Hilfsmittel nicht gewünscht ist, sollte zudem die Alignment-Qualität der Ausrichtungsstruktur 32 in allen Bereichen 28A, 28B vergleichbar sein.

In dem der Beschichtung mit flüssigkristallinem Material folgenden Arbeitsgang wird für die eigentliche Prägung, z. B. eines Hologramm- oder Mikrospiegelmotivs 44, vollflächig UV-Prägelack 34 (im Ausführungsbeispiel in zwei Stufen) aufgetragen. Damit liegt die nematische Flüssigkristallschicht 30 zwischen UV-Lackschichten eingebettet. Neben dem Nematenmotiv kommt die Prägelackschicht 34 direkt auf die schon bestehende Prägung 32 bzw. den Prägelack 26. Wenn die Brechungsindizes ähnlich sind (d. h. sich im sichtbaren Spektrum um nicht mehr als 0,1 und insbesondere um nicht mehr als 0,05 unterscheiden), verschwindet auch hier die "Alignment"-Prägung bzw. Ausrichtungsstruktur 32 optisch.

Die Flüssigkristallschicht 30 und der zweite Prägelackaufbau 34 können abweichende Brechungsindizes haben. Im Idealfall sind die Brechungsindizes auch hier so aufeinander abgestimmt, dass keine starken Brechungsindexsprünge auftreten.

Eine Begrenzung der ersten Prägung auf den Bereich, in dem das nematische flüssigkristalline Material gedruckt werden soll oder könnte (Passerschwankungen), ist möglich. Diese Begrenzung erfordert aber beim Druck des flüssigkristallinen Materials einen Insetter-Arbeitsgang, der mit erhöhtem Ausschuss verbunden sein kann.

Unabhängig davon kann ein Insetter-Arbeitsgang auch erforderlich sein, um zu vermeiden, dass die Schweißnähte (Prägewerkzeug mit Alignmentmotiv und Prägewerkzeug mit Motiv der Reliefstruktur) ins Motiv kommen und gegenseitig zu Problemen durch Aufbau führen.

### Bezugszeichenliste

- 10: Banknote
- 12: Transferelement
- 14: Fensterbereiche
- 16: Sicherheitsfaden
- 20: Sicherheitselement
- 22: Trägerfolie
- 24, 26: Prägelack
- 28A, 28B: Teilbereiche
- 30: Flüssigkristallschicht
- 32: Ausrichtungsstruktur
- 34: Prägelack
- 36: Metallisierung
- 38: Reliefstruktur
- 40: Sicherheitselement
- 42: Polarisator
- 44: Reliefbild
- 46: Bildmotiv
- 48: Betrachter
- 52: Substrat
- 62, 64, 72: Bildelemente

## Patentansprüche

1. Sicherheitselement zur Absicherung von Wertgegenständen, mit einer Motivschicht auf Basis eines flüssigkristallinen Materials, das zu Ausbildung eines latenten Motivs ausgelegt und bestimmt ist, **dadurch gekennzeichnet, dass**
- das Sicherheitselement eine auf einer Trägerfolie angeordnete erste Prägelackschicht, eine partiell vorliegende Motivschicht auf Basis eines nematischen flüssigkristallinen Materials und eine ein- oder mehrschichtige vollflächig vorliegende zweite Prägelackschicht umfasst,
- wobei die erste Prägelackschicht mit einer Prägung versehen ist, die zur Ausbildung eines zweiten latenten Motivs zumindest zwei Bereiche mit Ausrichtungsstrukturen unterschiedlicher Orientierung aufweist,
- wobei die Motivschicht in Form eines ersten latenten Motivs bereichsweise direkt auf der ersten Prägelackschicht und überlappend mit den das zweite latente Motiv bildenden Bereichen angeordnet ist, wobei das flüssigkristalline Material durch die motivbildenden Bereiche in Form des zweiten latenten Motivs mit jeweils unterschiedlicher Orientierung homogen ausgerichtet ist, so dass das von den unterschiedlichen Ausrichtungsstrukturen gebildete Motiv bei Betrachtung durch einen Polarisator erkennbar ist,
- und wobei die zweite Prägelackschicht mit einer Prägung zur Erzeugung einer mikrooptischen Reliefstruktur und einer reflexionserhöhenden Beschichtung versehen ist.

2. Sicherheitselement nach Anspruch 1, **dadurch gekennzeichnet, dass** das flüssigkristalline Material durch einen ersten motivbildenden Bereich unter einem Winkel zur Ausrichtung der flüssigkristallinen Materials durch einen zweiten motivbildenden Bereich ausgerichtet ist und eine zum ersten motivbildenden Bereich unterschiedliche Polarisationswirkung aufweist.

3. Sicherheitselement nach Anspruch 1 oder 2, **dadurch gekennzeichnet, dass** die erste Prägelackschicht vollflächig vorliegt.

4. Sicherheitselement nach wenigstens einem der Ansprüche 1 bis 3, **dadurch gekennzeichnet, dass** die dem flüssigkristallinen Material zugewandte Oberfläche der ersten Prägelackschicht in den motivbildenden Bereichen feine Rillen oder Gitter aufweist, durch die die Moleküle des flüssigkristallinen Materials ausgerichtet sind.

5. Sicherheitselement nach Anspruch 4, **dadurch gekennzeichnet, dass** die Rillen oder Gitter eine Periodenlänge von 0,2 µm bis 2,0 µm, vorzugsweise von 0,8 µm bis 1,2 µm, und eine Profiltiefe von 50 nm bis 600 nm, vorzugsweise von 200 nm bis 400 nm aufweisen.

6. Sicherheitselement nach wenigstens einem der Ansprüche 1 bis 5, **dadurch gekennzeichnet, dass** der Brechungsindex der ersten und/ oder der zweiten Prägelackschicht im sichtbaren Spektrum zwischen den orientierungsabhängigen Brechungsindizes der Motivschicht liegt.

7. Sicherheitselement nach wenigstens einem der Ansprüche 1 bis 6, **dadurch gekennzeichnet, dass** sich die Brechungsindizes der Ausrichtungsschicht und der zweiten Prägelackschicht im sichtbaren Spektrum um nicht mehr als 0,1, insbesondere um nicht mehr als 0,05 unterscheiden.

8. Sicherheitselement nach wenigstens einem der Ansprüche 1 bis 7, **dadurch gekennzeichnet, dass** das erste latente Motiv ein oder mehrere erste Bildelemente enthält und das zweite latente Motiv eine Vielzahl von zweiten Bildelementen enthält, wobei die ersten und zweiten Bildelemente alphanumerische Zeichen, Muster oder Codierungen umfassen, wobei die zweiten Bildelemente vorzugsweise in einem Raster angeordnet sind.

9. Sicherheitselement nach wenigstens einem der Ansprüche 1 bis 8, **dadurch gekennzeichnet, dass** die mikrooptische Reliefstruktur durch eine diffraktive Struktur, insbesondere ein- oder zweidimensionale periodische diffraktive Struktur, durch eine Mattstruktur, eine Subwellenlängenstruktur, insbesondere ein Subwellenlängengitter oder eine Mottenaugenstruktur, und/oder durch eine nicht-beugende Mikrostruktur, insbesondere eine Anordnung von Mikrospiegeln oder Mikrolinsen, gebildet ist.

10. Datenträger mit einem Sicherheitselement nach einem der Ansprüche 1 bis 9, wobei der Datenträger insbesondere ein Wertdokument oder eine Ausweiskarte ist.

11. Verfahren zur Herstellung eines Sicherheitselements zur Absicherung von Wertgegenständen, mit einer Motivschicht aus flüssigkristallinem Material, das zur Erzeugung einen latenten Motivs ausgelegt und bestimmt ist, wobei bei dem Verfahren
- auf eine Trägerfolie zur Ausbildung einer Ausrichtungsschicht zur homogenen Orientierung eines flüssigkristallinen Materials eine erste Prägelackschicht aufgebracht wird,
- die erste Prägelackschicht mit einer Prägung versehen wird, um zur Ausbildung eines zweiten latenten Motivs zumindest zwei Bereiche mit Ausrichtungsstrukturen unterschiedlicher Orientierung zu erzeugen, und der Prägelack ausgehärtet wird,
- eine Motivschicht auf Basis eines nematischen flüssigkristallinen Materials in Form eines ersten latenten Motivs bereichsweise direkt auf die erste Prägelackschicht und überlappend mit den das zweite latente Motiv bildenden Bereichen aufgebracht wird, wobei das flüssigkristalline Material durch die Ausrichtungsstrukturen der motivbildenden Bereiche mit unterschiedlicher, homogener Orientierung ausgerichtet wird,
- das flüssigkristalline Material durch Beaufschlagung mit Strahlung gehärtet wird, und
- auf die Trägerfolie mit der Motivschicht eine ein- oder mehrschichtige zweite Prägelackschicht vollflächig aufgebracht wird, die zweite Prägelackschicht mit einer Prägung zur Erzeugung einer mikrooptischen Reliefstruktur versehen wird und anschließend mit einer reflexionserhöhenden Beschichtung versehen wird.

12. Verfahren nach Anspruch 11, **dadurch gekennzeichnet, dass** die erste Prägelackschicht ohne Vorhärtung geprägt wird, wobei vor dem Aufbringen der ersten Prägelackschicht vorzugsweise eine weitere Lackschicht auf die Trägerfolie aufgebracht und zumindest teilweise gehärtet wird.

13. Verfahren nach Anspruch 11 oder 12, **dadurch gekennzeichnet, dass** das flüssigkristalline Material vor der Beaufschlagung mit Strahlung physikalisch getrocknet wird.

14. Verfahren nach wenigstens einem der Ansprüche 11 bis 13, **dadurch gekennzeichnet, dass** die erste Prägelackschicht vollflächig aufgebracht wird.

15. Verfahren nach wenigstens einem der Ansprüche 12 bis 14, **dadurch gekennzeichnet, dass** die erste und/oder die zweite Prägelackschicht und/oder die Motivschicht aufgedruckt wird/werden.
